# EUROPEAN PATENT SPECIFICATION

(11) **EP 2 194 205 B1**
(45) Date of publication and mention of the grant of the patent: **17.08.2011**
(21) Application number: 09177952.0
(22) Date of filing: 03.12.2009
(51) Int. Cl.: E04B 2/78, F16B 7/04

(54) **Improved removable bracket for connecting a structural element to a supporting surface**
Verbesserter herausnehmbarer Träger zum Verbinden eines Konstruktionselementes an einer Auflagefläche
Patte d'attache décrochable améliorée pour racorder un élément de construction à une surface portante

(30) Priority: 04.12.2008 IT VI20080291
(43) Date of publication of application: 09.06.2010
(73) Proprietor: Alutecnica Srl, 36057 Arcugnano (VI) (IT)
(72) Inventor: Cisotto, Mirko, 36050 Monteviale (VI) (IT)
(74) Representative: Bonini, Ercole

(56) References cited:
- EP-A- 0 552 647
- DE-A1-102007 009 667

## Description

The present invention concerns a removable bracket particularly suited to connect in a stable manner two or more structural elements for making supporting architectural structures.

The present invention also concerns an architectural structure comprising a plurality of structural elements connected to one another by means of the above mentioned removable brackets of the invention.

Finally, the present invention concerns a method for fixing a plurality of structural elements through the use of one or more of the above mentioned removable brackets of the invention.

The document EP0552647 discloses a removable bracket with the features of the preamble of claim 1.

It is known that many architectural structures used for supporting various types of equipment, like for example photovoltaic panels, are obtained through the removable connection of structural elements, generally sections, in such a way as to modify the architectural structure and, consequently, the position of the equipment installed on it.

It is also known that a first technique used to connect the above mentioned structural elements with one another in a removable manner consists in the use of special removable brackets comprising a series of screws arranged at the level of each one of their sides and resting against the lateral surfaces of the same structural elements.

In particular, the above mentioned screws are screwed and fixed onto holes specifically made along the longitudinal direction of each structural element, in such a way as to couple the structural elements with one another in a stable manner and thus obtain an architectural structure with particular shape and characteristics.

This procedure, however, poses some important drawbacks that are listed here below.

A first recognized drawback posed by the above mentioned technique lies in that the operations necessary for carrying out the architectural structures are complex and articulated, and furthermore their execution requires too much time.

In fact, the operator has first of all to determine the points where two structural elements must be coupled with each other, and successively make the threaded holes at the level of these points, in order to allow said two structural elements to be connected and locked by means of the removable brackets previously described.

A further drawback posed by this connection technique is represented by the fact that, once the holes have been made and the structural elements have been fixed together, it is not possible any more to modify the mutual position of the structural elements and therefore the composition of the architectural structure, unless further holes are made in different positions.

In the attempt to solve the drawbacks described above, and in particular to allow said structural elements to be connected in a removable manner, alternative fixing techniques have been developed over the years.

According to one of these techniques, in fact, two or more structural elements are removably connected by means of special removable brackets introduced in and fixed to slits obtained along the longitudinal direction of each structural element.

In particular, said removable brackets comprise fixing means that are inserted in the above mentioned slits at the level of one of the ends of a first structural element and successively positioned in the point where the removable brackets, together with a second structural element, must be coupled with and locked onto the first element.

As is evident from the description of the removable brackets provided above, also in this case the use of said connection technique poses an important drawback that is highlighted here below.

Said drawback lies in that the operator is forced, first of all, to introduce the above mentioned removable brackets from one end of each structural element, and then to position them at the level of the fixing point and carry out the coupling with a second structural element, in such a way as to obtain an architectural structure having a particular set-up.

Disadvantageously, also this assembly method is complex and requires too much time.

In fact, most of the times, in order to carry out architectural structures made up of a plurality of structural elements several operators must work together, thus increasing the labour costs.

The present invention aims to overcome the drawbacks listed above.

In particular, the invention has the object to provide a removable bracket that allows a structural element to be connected and fixed to a supporting surface in a quicker and simpler way compared to the connections made with brackets belonging to the known art.

A further object of the invention is to provide a removable bracket that makes it possible to modify in a simple and quick manner the position of a structural element in relation to a supporting surface and therefore to modify the composition of the architectural structure obtained.

It is another, yet not the least object of the invention to provide a removable bracket that makes it possible to obtain a connection between a structural element and a supporting surface that is more stable and lasts longer than the connection that can be obtained using the brackets of the known art.

The objects described above are achieved by a removable bracket having the characteristics illustrated in the main claim.

The invention also comprises the method for fixing two or more structural elements by means of the removable bracket of the invention and the architectural structure obtained by implementing said method.

Further characteristics of the removable bracket of the invention are described in the dependent claims.

Advantageously, the removable bracket of the invention facilitates the assembly operations and thus allows a single operator to fix the various structural elements to one another, thus reducing the labour required to make the architectural structures.

Still advantageously, the reduction of the operations necessary for fixing the various structural elements through the removable bracket of the invention makes it possible to reduce the time necessary for making each individual architectural structure, consequently increasing the profit margin for each piece sold.

The aforesaid objects and advantages, and others that will be described in greater detail below, will be highlighted in the description of preferred embodiments of the invention, provided here as non-restrictive examples, with reference to the attached drawings, wherein:
- Figure 1 shows an axonometric view of the removable bracket that is the subject of the invention;
- Figure 2 shows a side cross section along a vertical plane of the removable bracket that is the subject of the invention;
- Figure 3 shows an axonometric view of the removable bracket of the invention suited to connect a structural element to a supporting surface;
- Figure 4 shows an axonometric view of an example of an architectural structure for supporting a solar panel;
- Figure 5 shows the side cross section along a vertical plane of the first structural element to which the removable bracket of the invention is applied;
- Figure 6 shows an axonometric view of the fixing means applied to the removable bracket of the invention;
- Figure 7 shows the front section according to a vertical plane of the removable bracket applied to the supporting surface;
- Figure 8 shows a side view of the first operation of the method for fixing a structural element to a supporting surface through the removable bracket of the invention;
- Figure 9 shows a side view of the second operation of the method for fixing a structural element to a supporting surface by means of the removable bracket of the invention;
- Figure 10 shows a side view of the third operation of the method for fixing a structural element to a supporting surface by means of the removable bracket of the invention;
- Figure 11 shows a side view of the fourth operation of the method for fixing a structural element to a supporting surface by means of the removable bracket of the invention.

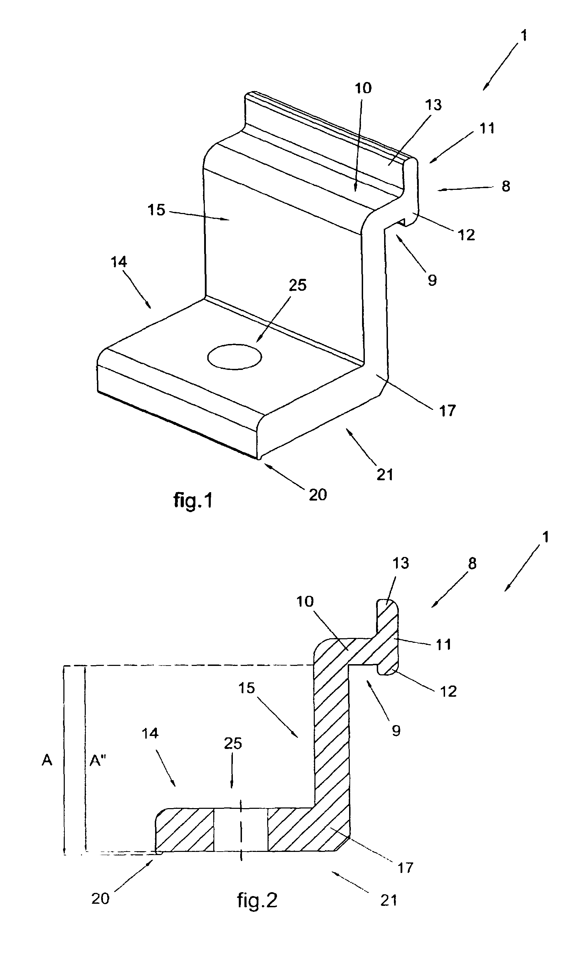

The removable bracket that is the subject of the invention is shown in its whole in Figures 1 and 2, where it is indicated by **1.**

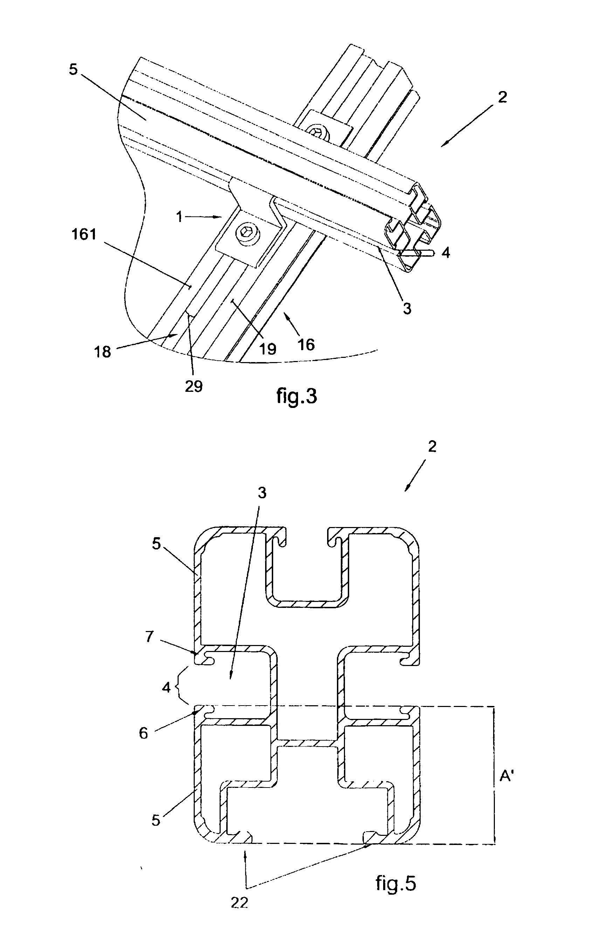

It can be observed in Figure 3 that the above mentioned removable brackets 1 of the invention are particularly suited to connect in a stable manner the structural elements that make up architectural structures **100** of various types, also protected by the present patent.

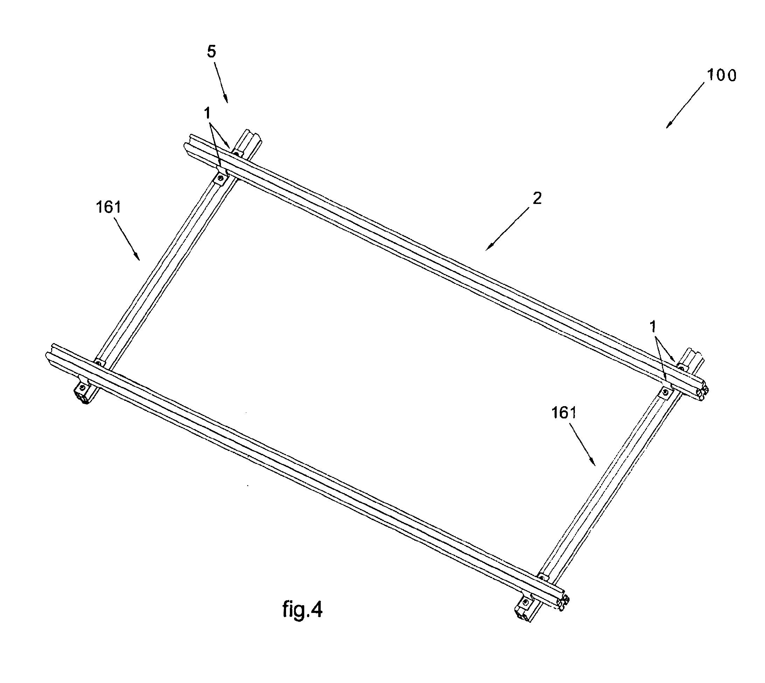

In the embodiment described herein said architectural structure **100** taken in consideration is a frame for supporting and positioning one or more photovoltaic panels, as shown in Figure 4.

It cannot be excluded that in different embodiments of the invention the architectural structures **100** may be used for supporting other types of equipment.

Regarding the removable structure 1 of the invention, it engages into a slit **3** obtained along the longitudinal direction of a first structural element **2,** as shown in Figure 3.

Said slit **3** is provided with an access opening **4** at the level of one of the lateral surfaces **5** of the first structural element **2** and this access opening **4** is delimited by a first and by a second projection **6** and **7,** both facing towards the inside of said slit **3,** as shown in Figure 5.

Always in Figure 5 it can be noted that in the particular embodiment described herein the slit **3** has a hollow rectangular profile.

In different embodiments of the invention, not illustrated herein, said hollow profile can be round or have different shapes.

As regards the removable bracket **1,** it comprises a coupling section **8** in which it is possible to identify, in the embodiment described herein, an undercut area **9** suited to house said first projection **6,** as shown in Figures 1 and 2.

Such a situation occurs when the coupling section **8** is inserted with an oblique direction with respect to the lateral surface **5** in which the access opening **4** is provided, and successively released vertically after rotating the entire bracket **1** towards the above mentioned lateral surface **5.**

In different embodiments of the invention, not described and not represented herein, a plurality of undercuts can be made on the coupling section **8.** According to the invention, the coupling section **8,** as shown in Figure 2, has a substantially T-shaped profile defined by a core **10** to which a platband **11** is orthogonally and asymmetrically connected.

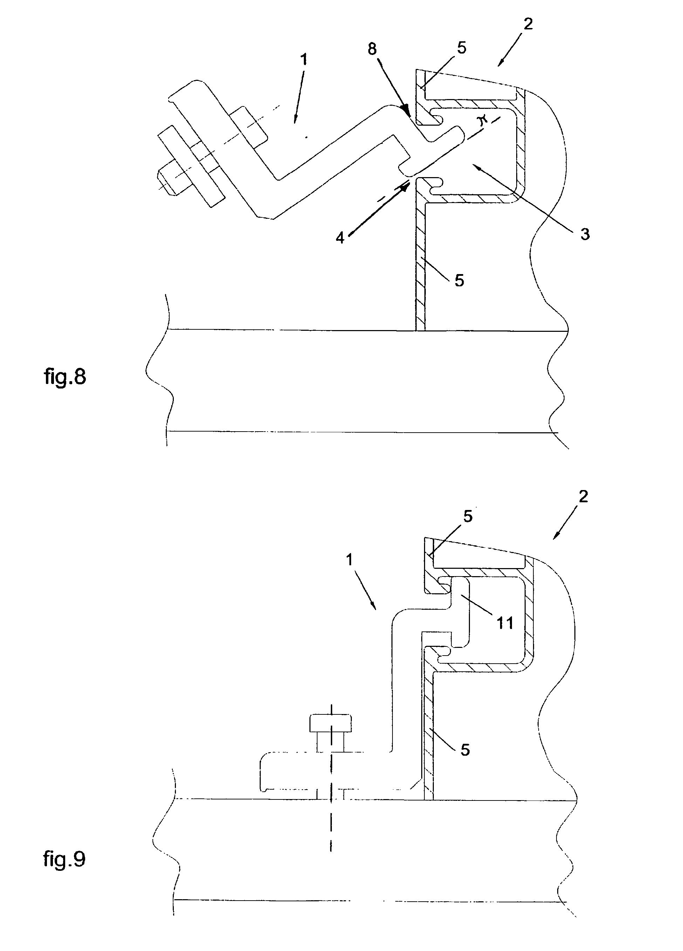

This configuration makes it possible to identify on the coupling section **8** a first protrusion **12** that delimits the above mentioned undercut area **9.** Furthermore, the coupling section **8** defines a second protrusion **13** suited to oppose the second projection **7** present on the edge of the access opening **4.** In the example of embodiment described herein, the second protrusion **13** is larger than the corresponding first protrusion **12** and according to this embodiment the direction of insertion of the coupling section **8** present on the removable bracket **1** is the direction according to which the second protrusion **13** is followed by the first protrusion **12,** as indicated by the arrow in Figure 8. In other construction variants, not described herein, the second protrusion **13** may have the same size as or be smaller than the first protrusion **12,** provided that it allows the structure obtained in this way to be connected to the first structural element **2.**

As regards the structure of the removable bracket **1,** in the particular embodiment described herein, as can be noted in Figure 2, it comprises a base **14** resting on a supporting surface **16** and a lateral wall **15** that develops orthogonally at the level of one end of the base **14.**

In particular, the above mentioned lateral wall **15** is created on the end **17** of the base **14** that is nearer to the lateral surface **5** of the first structural element **2.**

As can be observed in Figure 1, the above mentioned coupling section **8** is made on the end of the lateral wall **15** that is opposite the end connected to the base **14.**

In different embodiments of the invention, the removable bracket 1 can have a different configuration, provided that it comprises at least one base resting on the supporting surface and a lateral wall arranged orthogonally, on which said coupling section develops.

In the example of embodiment described herein the supporting surface **16,** previously mentioned, corresponds to a second structural element **161** arranged at right angles to the first structural element **2.**

On said second structural element **161** there is a further slit **18** at the level of its lateral surface **19** facing said first structural element **2.**

According to alternative embodiments, not described and not represented herein, the supporting surface **16** can be of any other type, provided that it allows the base **14** belonging to the removable bracket 1 to be rested and fixed thereon.

The removable bracket **1** is preferably but not necessarily provided with a projecting tooth **20** that develops on the base **14** at the level of its bearing surface **21** arranged on the supporting surface **16,** as shown in Figure 2.

In particular, said projecting tooth **20** is provided on the end of the base **14** opposite the point where the above mentioned lateral wall **15** develops.

As can be seen below during the description of the fixing method **200,** said projecting tooth **20** makes it possible to guarantee the coupling between the base **14** and the supporting surface **16,** thus increasing the stability of the whole structure.

Furthermore, in the particular embodiment of the invention described herein, as illustrated in Figures 2 and 5, the dimensions of the removable bracket **1** are such as to guarantee contact between its base **14** and the supporting surface **16** and, therefore, to increase the locking action of the first structural element 2 on the same supporting surface **16.**

In fact, as explained above, the present patent protects an architectural structure **100** comprising a plurality of structural elements connected to one another by means of the above mentioned brackets **1** of the invention.

In particular, the height **A** of each one of said brackets **1** between the projecting tooth **20** and the undercut area **9** is not inferior to the height **A'** measured between the bottom **22** of a first structural element **2** and the top of its first projection **6.**

Again, the height **A"** between the bearing surface **21** of the base **14** and the undercut area **9** is shorter than the height **A'** measured between the bottom **22** of the above mentioned first structural element **2** and the top of its first projection **6.**

This special dimensions, as will be explained in greater detail below, make it possible to manage the changes in the dimensions of the first structural element **2** due to the fact that it is substantially made of aluminium.

Finally, on the base **14** of the above mentioned removable bracket 1 there are fixing means **23** that allow the bracket itself to be locked on the supporting surface **16.**

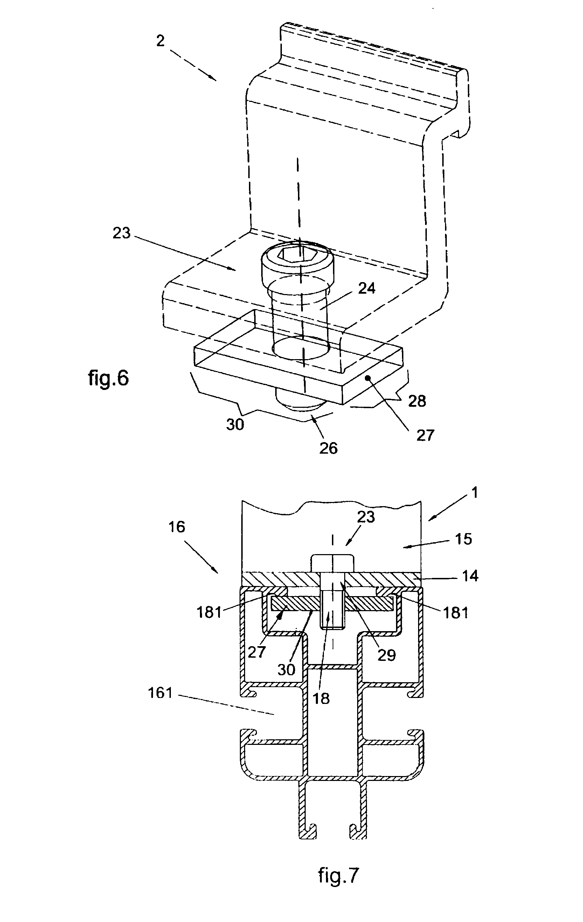

As shown in Figure 6, in particular, the fixing means **23,** in the particular embodiment of the invention described herein, comprise a screw **24** inserted in a through hole **25** made in the above mentioned base **14.**

A misaligned element **27** is screwed at the level of the threaded part **26** of said screw **24,** said misaligned element **27** having a short side **28** that is narrower than the opening **29** of the slit **18** made in the supporting surface **16,** and a long side **30** that is wider than the same opening **29,** as shown in Figure 7.

In this way, said misaligned element **27** is inserted in the opening **29** when its long side **30** is parallel to the longitudinal axis of the above mentioned slit **18.**

Once the misaligned element **27** has been introduced in the slit **18,** it is rotated by screwing the screw **24** and positioned in such a way as to counteract the inside walls **181** of the slit **18,** thus locking the removable bracket 1 onto the supporting surface **16** in a stable manner.

In different construction variants the fixing means **23** present on the base **14** may be of another type, provided that they belong to the known art and that they allow a stable connection to be achieved between the supporting surface **16** and the removable bracket **1.**

In order to be able to use the removable bracket **1** of the invention, in the embodiment described herein it is necessary to employ a method **200** for fixing a first structural element **2** to a supporting surface **16,** said method comprising an additional operation compared to the fixing methods of the known art.

In particular, the first operation to be carried out, indicated by a and already present in the known art, consists in the insertion of the coupling section **8** in the slit **3** through its access opening **4** according to a plane π that is oblique in relation to the above mentioned lateral surface **5** of the first structural element **2,** as shown in Figure 8.

As shown in Figure 9, illustrating the operation **b** of the method **200,** it is necessary to rotate the coupling section **8** and thus the entire removable bracket **1** towards the lateral surface **15** of the above mentioned first structural element **2,** in such a way as to move the platband **11** to a position substantially parallel to the lateral surface **5** itself.

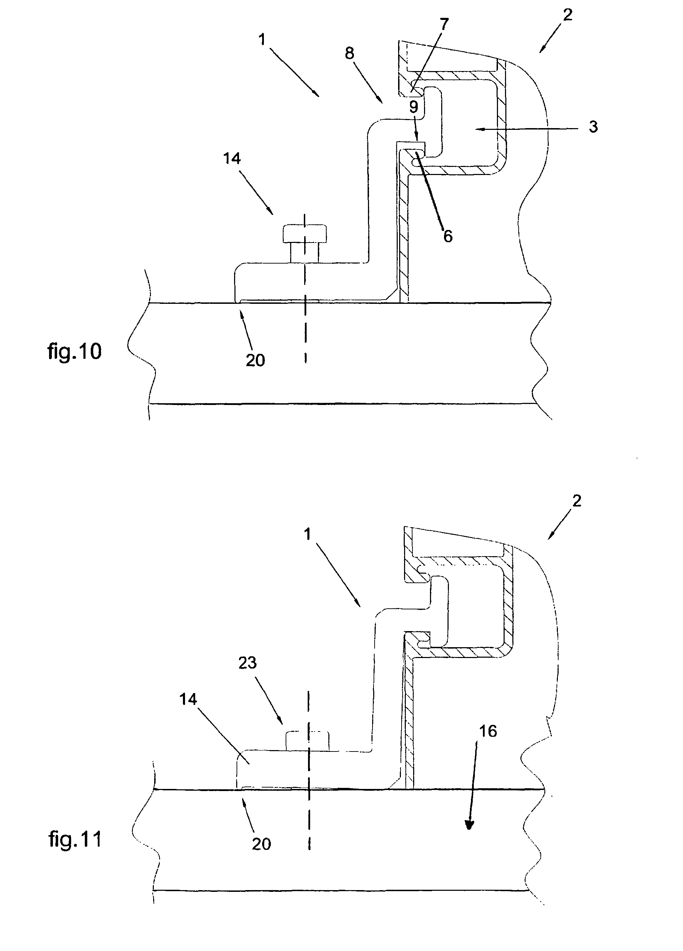

The method of the invention, like the methods of the known art, finally includes an operation, indicated by **d** and illustrated in Figure 11, which consists in locking in a stable manner the removable bracket **1** and, consequently, the first structural element **2** on the supporting surface **16** using the above mentioned fixing means **23.**

The novelty and the inventive idea of the method of the invention lie in a further operation **c,** carried out before the fixing operation **d** and after the rotation operation **b,** which includes the vertical release of the removable bracket **1** and thus of the coupling section **8,** so that the undercut area **9** receives the first projection **6,** and so that the second protrusion **13** present on the access opening **4** counteracts the second projection **7,** as shown in Figure 10.

At this point, the particular structure of the removable bracket **1** comprising the projecting tooth **20** on the base **14** and having the dimensions previously described allows only the projecting tooth **20** to rest on the supporting surface **16** and prevents the remaining part of the bearing surface **21** from touching the supporting surface **16** itself.

Successively, when the fixing operation **d** of the method of the invention is performed, the projecting tooth **20** behaves like a lever with respect to the opposite portion of the base **14,** which therefore tends to be pushed towards the supporting surface **16** itself, until obtaining a mutual contact and consequently a stable and long-lasting locking action.

The above clearly shows that the removable bracket that is the subject of the invention achieves all the set objects.

In particular, the invention achieves the object to provide a removable bracket that makes it possible to connect and fix a structural element to a supporting surface in a quicker and simpler manner compared to the connections made using the brackets of the known art.

The invention also achieves the object to provide a removable bracket that makes it possible to modify the position of a structural element in relation to a supporting surface in a quick and simple manner and thus makes it possible to modify the composition of the architectural structure obtained therewith.

The invention also achieves the object to provide a removable bracket that makes it possible to obtain a connection between a structural element and a supporting surface that is more stable and long-lasting compared to the connection obtained using the brackets of the known art.

On implementation, the removable bracket and the fixing method that are the subjects of the invention may undergo changes that, though not illustrated or described herein, shall nonetheless be covered by the present patent, provided that they come within the scope of the claims that follow.

In the cases where the technical characteristics illustrated in the claims are followed by references, these have been added only with the aim to facilitate the comprehension of the claims themselves and therefore said references do not have any limiting effect on the degree of protection to be granted to each element they identify only by way of example.

## Claims

1. Removable bracket (1) suited to be coupled to a slit (3) developing longitudinally made in a first structural element (2) and having the access opening (4) that develops along the lateral surface (5) of said first structural element (2), said access opening (4) being delimited by a first and by a second projection (6, 7), both facing towards the inside of said slit (3), said removable bracket (1) comprising a coupling section (8) in which it is possible to identify at least one undercut area (9) suited to house at least one of said projections (6, 7) when said coupling section (8) is inserted with an oblique direction and released vertically after the rotation of said removable bracket (1) towards said lateral surface (5), **characterized in that** said coupling section (8) has a substantially T-shaped profile defined by a core (10) and by a platband (11) orthogonal to said core (10), in such a way as to define a first protrusion (12) that delimits, together with said core (10), said undercut area (9) and a second protrusion (13) suited to oppose said second projection (7) when said undercut area (9) houses said first projection (6).

2. Removable bracket (1) according to claim 1), **characterized in that** said platband (11) is arranged asymmetrically on said core (10).

3. Removable bracket (1) according to any one of the preceding claims, **characterized in that** it comprises at least one base (14) from one end (17) of which a lateral wall (15) develops in an orthogonal direction, and wherein said coupling section (8) is obtained on said lateral wall (15), in such a way that said platband (11) is substantially parallel to said lateral wall (15).

4. Removable bracket (1) according to claim 3), **characterized in that** it is provided with a projecting tooth (20) that develops on the bearing surface (21) of said base (14) that rests on a supporting surface (16), at the level of the opposite end where said lateral wall (15) is carried out.

5. Removable bracket (1) according to claim 4), **characterized in that** said base (14) comprises fixing means (23) suited to lock said removable bracket (1) on said supporting surface (16) in a stable manner.

6. Removable bracket (1) according to claim 5), **characterized in that** said fixing means (23) comprise a screw (24) inserted in a through hole (25) made in said base (14).

7. Architectural structure (100) of the type comprising a first structural element (2) having the features mentionned in the preamble of claim 1 and at least one removable bracket according to any one of the claims from 4) to 6) and suited to be coupled into said slit (3) with longitudinal development made in said first structural element (2), **characterized in that** the height (A) measured between said projecting tooth (20) and said undercut area (9) isn't shorter than the height (A') measured between the bottom (22) of said first structural element (2) and the top of said first projection (6).

8. Architectural structure (100) of the type comprising a first structural element (2) having the features mentionned in the preamble of claim 1 and at least one removable bracket according to any one of the claims from 4) to 7) and suited to be coupled into said slit (3) with longitudinal development made in said first structural element (2), **characterized in that** the height (A") measured between said bearing surface (21) of said base (14) and said undercut area (9) is shorter than the height (A') measured between the bottom (22) of said first structural element (2) and the top of said first projection (6).

9. Method (200) for fixing a first structural element (2) to a supporting surface (16) through a removable bracket (1) whose characteristics are in accordance with any one of the preceding claims, of the type comprising the following operations:
a) inserting said coupling section (8) in said slit (3) through said access opening (4) according to a plane (π) that is oblique in relation to said lateral surface (5) of said first structural element (2);
b) rotating said removable bracket (1) towards said lateral surface (5) of said first structural element (2), in such a way as to move said platband (11) to a position substantially parallel to said lateral surface (5);
d) fixing said removable bracket (1) with said fixing means (23) to said supporting surface (16) so that said first structural element (2) is coupled with said removable bracket (1) in a stable manner,
**characterized in that** before said fixing operation (d) and after said rotation operation (b) an operation (c) is performed to release said coupling section (8), in such a way as to allow said undercut area (9) to house said first projection (6) and to allow said second protrusion (13) of said platband (11) to counteract said second projection (7).

## Patentansprüche

1. Abnehmbare Verbindungsklammer (1), geeignet zur Verbindung mit einem in Längsrichtung verlaufenden Spalt (3) in einem ersten Strukturelement (2) mit Zugangsöffnung (4) entlang der Seitenfläche (5) des besagten ersten Strukturelements (2), wobei die besagte Zugangsöffnung (4) durch einen ersten und durch einen zweiten Vorsprung (6, 7) begrenzt ist, die beide zum Inneren des besagten Spalts (3) gerichtet sind, und wobei die besagte, abnehmbare Verbindungsklammer (1) einen Verbindungsabschnitt (8) umfasst, in dem wenigstens einen Unterschnittbereich (9) erkennbar ist, der geeignet ist, wenigstens einen der besagten Vorsprünge (6, 7) aufzunehmen, wenn der besagte Verbindungsabschnitt (8) in Schrägrichtung eingesetzt und senkrecht losgelassen wird, nachdem zuvor die abnehmbare Verbindungsklammer (1) zur besagten Seitenfläche (5) hin gedreht wurde, **dadurch gekennzeichnet, dass** der besagte Verbindungsabschnitt (8) ein im Wesentlichen "T"-förmiges Profil aufweist, das durch einen Kern (10) sowie durch eine zu dem besagten Kern (10) lotrecht stehende Kopfplatte (11) definiert ist, so dass eine erste Auskragung (12) definiert wird, welche gemeinsam mit dem besagten Kern (10) den besagten Unterschnittbereich (9) begrenzt, sowie eine zweite Auskragung (13), die geeignet ist, dem besagten zweiten Vorsprung (7) entgegenzuwirken, wenn der besagte Unterschnittbereich (9) den besagten ersten Vorsprung (6) aufnimmt.

2. Abnehmbare Verbindungsklammer (1) gemäß Patentanspruch 1), **dadurch gekennzeichnet, dass** die besagte Kopfplatte (11) asymmetrisch an dem besagten Kern (10) positioniert ist.

3. Abnehmbare Verbindungsklammer (1) gemäß eines jeglichen der vorstehenden Patentansprüche, **dadurch gekennzeichnet, dass** sie wenigstens eine Basis (14) umfasst, von deren einem Ende (17) eine Seitenwand in orthogonale Richtung verläuft, und wobei der besagte Verbindungsabschnitt (8) derart an der besagten Seitenwand (15) erzielt ist, dass die besagte Kopfplatte (11) im Wesentlichen parallel zu der besagten Seitenwand (15) steht.

4. Abnehmbare Verbindungsklammer (1) gemäß Patentanspruch 3), **dadurch gekennzeichnet, dass** sie einen hervorstehenden Zahn (20) aufweist, der sich über die Auflagefläche (21) der besagten Basis (14) erstreckt, welche auf einer Tragfläche (16) aufliegt auf Höhe des entgegenfliegenden Endes, an dem die besagte Seitenwand (15) ausgeführt ist.

5. Abnehmbare Verbindungsklammer (1) gemäß Patentanspruch 4), **dadurch gekennzeichnet, dass** die besagte Basis (14) Befestigungsmittel (23) umfasst, die geeignet sind, die besagte abnehmbare Verbindungsklammer (1) stabil an der besagten Tragfläche (16) zu fixieren.

6. Abnehmbare Verbindungsklammer (1) gemäß Patentanspruch 5), **dadurch gekennzeichnet, dass** die besagten Befestigungsmittel (23) eine Schraube (24) umfassen, die in eine Durchgangsbohrung (25) in der besagten Basis (14) eingefügt ist.

7. Architektonische Struktur (100) des Typs, der ein erstes Strukturelement (2) umfasst, das die in der Präambel von Patentanspruch 1) erwähnten Eigenschaften aufweist, sowie wenigstens eine abnehmbare Verbindungsklammer gemäß eines jeden der Patentansprüche von 4) bis 6), und die geeignet ist, in den besagten, in Längsrichtung verlaufenden Spalt (3) in dem besagten ersten Strukturelement (2) eingesetzt zu werden, **dadurch gekennzeichnet, dass** die zwischen dem besagten, hervorstehenden Zahn (20) und dem besagten Unterschnittbereich (9) gemessene Höhe (A) nicht kleiner ist als die zwischen dem Boden (22) des besagten ersten Strukturelements (2) und der Spitze des besagten ersten Vorsprungs (6) gemessene Höhe (A').

8. Architektonische Struktur (100) des Typs, der ein erstes Strukturelement (2) umfasst, das die in der Präambel von Patentanspruch 1) erwähnten Eigenschaften aufweist, sowie wenigstens eine abnehmbare Verbindungsklammer gemäß eines jeden der Patentansprüche von 4) bis 7), und die geeignet ist, in den besagten, in Längsrichtung verlaufenden Spalt (3) in dem besagten ersten Strukturelement (2) eingesetzt zu werden, **dadurch gekennzeichnet, dass** die zwischen der besagten Auflagefläche (21) der besagten Basis (14) und dem besagten Unterschnittbereich (9) gemessene Höhe (A") kleiner ist als die zwischen dem Boden (22) des besagten ersten Strukturelements (2) und der Spitze des besagten ersten Vorsprungs (6) gemessene Höhe (A').

9. Methode (200) zur Befestigung eines ersten Strukturelements (2) an einer Tragfläche (16) mit Hilfe einer abnehmbaren Verbindungsklammer (1), deren Merkmale jedem einzelnen der vorstehenden Patentansprüche entsprechen, von dem Typ, der folgende Vorgänge umfasst:
a) Einsetzen des besagten Verbindungsabschnitts (8) in den besagten Spalt (3) durch die besagte Zugangsöffnung (4) gemäß einer Ebene (π), die bezüglich zur Seitenfläche (5) des besagten ersten Strukturelements (2) schräg steht;
b) Drehen der besagten Verbindungsklammer (1) zu der besagten Seitenfläche (5) des besagten ersten Strukturelements (2) hin, so dass die besagte Kopfplatte (11) in eine im Wesentlichen zu der besagten Seitenfläche (5) parallele Position gebracht wird;
d) Befestigen der besagten Verbindungsklammer (1) mit den besagten Befestigungsmitteln (23) an der besagten Tragfläche (16), so dass das besagte erste Strukturelement (2) stabil mit der besagten Verbindungsklammer (1) verbunden ist,
**dadurch gekennzeichnet, dass** vor dem besagten Befestigungsvorgang (d) und nach dem besagten Drehvorgang (b) ein Vorgang (c) ausgeführt wird, um den besagten Verbindungsabschnitt (8) loszulassen, so dass der besagte Unterschnittbereich (9) den besagten ersten Vorsprung (6) aufnehmen kann und die besagte, zweite Auskragung (13) der besagten Kopfplatte (11) dem besagten zweiten Vorsprung (7) entgegenwirken kann.

## Revendications

1. Bride amovibile (1) apte à être accouplée à une fente (3) se développant longitudinalement réalisée dans un premier élément structural (2) et ayant l'ouverture d'accès (4) qui se développe le long de la surface latérale (5) dudit premier élément structural (2), ladite ouverture d'accès (4) étant délimitée par une première et une deuxième saillies (6, 7) qui sont toutes les deux tournées vers l'intérieur de ladite fente (3), ladite bride amovible (1) comprenant une section d'accouplement (8) dans laquelle il est possible d'identifier au moins une zone de contre-dépouille (9) apte à loger au moins une desdites saillies (6, 7) quand ladite section d'accouplement (8) est insérée avec une direction oblique et relâchée verticalement après la rotation de ladite bride amovible (1) vers ladite surface latérale (5), **caractérisée en ce que** ladite section d'accouplement (8) présente un profil essentiellement en T défini par un noyau (10) et par une plate-bande (11) perpendiculaire audit noyau (10), de façon à définir une première saillie (12) qui délimite, avec ledit noyau (10), ladite zone de contre-dépouille (9) et une deuxième saillie (13) apte à opposer ladite deuxième saillie (7) quand ladite zone de contre-dépouille (9) loge ladite première saillie (6).

2. Bride amovible (1) selon la revendication 1), **caractérisée en ce que** ladite plate-bande (11) est disposée asymétriquement sur ledit noyau (10).

3. Bride amovible (1) selon l'une quelconque des revendications précédentes, **caractérisée en ce qu'**elle comprend au moins une base (14) d'une extrémité (17) de laquelle une paroi latérale (15) se développe perpendiculairement, et où ladite section d'accouplement (8) est obtenue sur ladite paroi latérale (15), de façon à ce que ladite plate-bande (11) est essentiellement parallèle à ladite paroi latérale (15).

4. Bride amovible (1) selon la revendication 3), **caractérisée en ce qu'**elle dotée d'une dent saillante (20) qui se développe sur la surface d'appui (21) de ladite base (14) qui repose sur une surface de support (16), à hauteur de l'extrémité opposée où ladite paroi latérale (15) est réalisée.

5. Bride amovible (1) selon la revendication 4), **caractérisée en ce que** ladite base (14) comprend des moyens de fixation (23) indiqués pour bloquer fixement ladite bride amovible (1) sur ladite surface de support (16).

6. Bride amovible (1) selon la revendication 5), **caractérisée en ce que** lesdits moyens de fixation (23) comprennent une vis (24) insérée dans un trou passant (25) réalisé sur ladite base (14).

7. Structure architecturale (100) du type comprenant un premier élément structural (2) ayant les caractéristiques mentionnées dans le préambule de la revendication 1) et au moins une bride amovible selon l'une quelconque des revendications de 4) à 6) et indiquée pour être accouplée dans ladite fente (3) avec développement longitudinal réalisé dans ledit premier élément structural (2), **caractérisée en ce que** la hauteur (A) mesurée entre ladite dent saillante (20) et ladite zone de contre-dépouille (9) n'est pas inférieure à la hauteur (A') mesurée entre le fond (22) dudit premier élément structural (2) et le sommet de ladite première saillie (6).

8. Structure architecturale (100) du type comprenant un premier élément structural (2) ayant les caractéristiques mentionnées dans le préambule de la revendication 1) et au moins une bride amovible selon l'une quelconque des revendications de 4) à 7) et indiquée pour être accouplée dans ladite fente (3) avec développement longitudinal réalisé dans ledit premier élément structural (2), **caractérisée en ce que** la hauteur (A") mesurée entre ladite surface d'appui (21) de ladite base (14) et ladite zone de contre-dépouille (9) est inférieure à la hauteur (A') mesurée entre le fond (22) dudit premier élément structural (2) et le sommet de ladite première saillie (6).

9. Méthode (200) pour la fixation dudit premier élément structural (2) à une surface de support (16) au moyen d'une bride amovible (1) dont les caractéristiques sont selon l'une quelconque des revendications précédentes, du type comprenant les opérations suivantes:
a) insérer ladite section d'accouplement (8) dans ladite fente (3) à travers ladite ouverture d'accès (4) selon un plan (π) qui est oblique par rapport à ladite surface latérale (5) dudit premier élément structural (2);
b) tourner ladite bride amovible (1) vers ladite surface latérale (5) dudit premier élément (2), de façon à amener ladite plate-bande (11) à une position essentiellement parallèle à ladite surface latérale (5);
d) fixer ladite bride amovible (1) avec lesdits moyens de fixation (23) à ladite surface de support (16) de façon à ce que ledit premier élément structural (2) est accouplé fixement avec ladite bride amovible (1),
**caractérisée en ce que** ladite opération de fixation (d) et après ladite opération de rotation (b) se vérifie une opération (c) pour le relâchement de ladite section d'accouplement (8) de façon à ce que ladite zone de contre-dépouille (9) puisse loger ladite première saillie (6) et à permettre à ladite deuxième saillie (13) de ladite plate-bande (11) de contraster ladite deuxième saillie (7).
